Europäisches Patentamt

European Patent Office

Office européen des brevets

(11) Publication number: **0 290 076**

**A2**

# EUROPEAN PATENT APPLICATION

(21) Application number: **88200767.7**

(51) Int. Cl.4 **C01B 21/082 , C04B 35/58**

(22) Date of filing: **20.04.88**

(30) Priority: **06.05.87 NL 8701064**

(43) Date of publication of application:
**09.11.88 Bulletin 88/45**

(84) Designated Contracting States:
**BE DE FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Lednor, Peter William**
**Badhuisweg 3**
**NL-1031 CM Amsterdam(NL)**

(74) Representative: **Aalbers, Onno et al**
**P.O. Box 302**
**NL-2501 CH The Hague(NL)**

(54) **Process for the preparation of sialon products.**

(57) The invention relates to a process for the preparation of sialon products by mixing zeolites with carbon or a carbon-containing compound and subjecting the obtained mixture to a carbothermic reduction in a nitrogen containing, flowing gas at a temperature in the range of 1350-1700 °C and to sialon products, having an average nitrogen content in the bulk of 25-31% by weight and an active surface of 1-15 $m^2/g$ (measured according to the BET method) and to shaped ceramic materials and catalyst carriers therefrom.

EP 0 290 076 A2

## PROCESS FOR THE PREPARATION OF SIALON PRODUCTS

The invention relates to a process for the preparation of sialon products by the carbothermic reduction of zeolites.

The expression "carbothermic reduction" is usually used for the reaction of silicon oxides or aluminium oxides with carbon and nitrogen, such as the conversion of silica to silicon nitride. After a long period of neglect, such reactions are now being studied as a method for the preparation of technical-grade ceramics from cheap starting materials, such as silica, clay, clay/polymer mixtures and carbonaceous rocks. Examples of such desired products are $Si_3N_4$ and the sialons, compositions formed from Si, Al, O and N.

From US patent No. 4,360,506, for example, a process is known for the preparation of beta'-sialon products which as single crystalline phase contain a solid solution of beta'-sialon according to the general formula $Si_{6-z}Al_zN_{8-z}O_z$ in which z = 1 to 4, which process comprises the heating of agglomerates in a nitrogen atmosphere at 1400-1600 °C, these agglomerates being obtained by drying a paste containing a silica/alumina material, such as kaolinitic clay, carbon and a pore-forming agent, whereby the pore-forming material may consist of fine particles of a woody material, such as sawdust or powdered olive pips.

With such a process, however, it is not possible to prepare in a reproducible and economically attractive manner high-quality ceramic materials with a precisely constant composition, which have recently become in great demand. As described in, for example, column 4, lines 20-30, pure kaolin is not very suitable as a starting material in connection with the desired plasticity of the initial paste, while the clays that could be used in its place are not as pure. Moreover, as described in column 4, lines 47-65, the actual nitride-forming treatment can lead to a great variety of impure sialon compositions, depending on the varying composition of the natural starting materials, which means that such a method of preparing a specific desired product is difficult to control and/or reproduce.

It will be appreciated that up to now there has been no commercial carbothermic reduction method for the fabrication of fine, non-oxide ceramic powders based on Si and/or Al. There is, therefore, still a great need for a reproducible and controllable method of preparing specific desired sialon products from relatively cheap starting materials. An object of the invention is therefore to provide such a preparation process.

Surprisingly, as a result of extensive research and development work, a process has now been that achieves this object, and in particular a process for the preparation of sialon products by means of carbothermic reduction of a zeolite, mixed with carbon or a carbon-containing compound in a nitrogen-containing, flowing gas, at a temperature of 1350-1700 °C. The "nitrogen-containing, flowing gas" can be pure nitrogen or a gas mixture of nitrogen and inert gases such as noble gases and/or small amounts of oxygen, hydrogen or carbon dioxide.

The process according to the invention can employ a great variaty of zeolites, both as regards the silicon/aluminium ratio and the charge-compensating counterions. According to one of the embodiments, zeolites with, for example, a polyhedron structure, such as chabazite, faujasite, the synthetic phases A, X and Y, and silicalite, can be successfully employed, with various sorts of desired counterions. In general, the present process advantageously employs synthetic zeolites obtained on an industrial scale. In this process, products are obtained that contain 25-31% by weight N, from which it can be seen that nitride formation has taken place to a large extent.

Such an incorporation of nitrogen is surprising for an expert, who would expect, on the basis of hitherto prevailing opinion with regard to the low stability of the internal pore structure of most zeolites above about 1200 °C, that due to a collapse of this structure before the attainment of the actual reaction temperature the incorporation of nitrogen could hardly or not at all take place.

It was found that the highly porous structure apparently remains intact long enough to enable nitrogen to be incorporated in the silicon/aluminium/oxygen lattice at the temperatures employed.

The opinion held up to now by experts that the zeolite structure is unstable at temperatures above 1200 °C is documented, for example, by J.A. Rabo, Zeolite Chemistry and Catalysis, ACS Monograph 171, American Chemical Society, Washington D.C., 1976, page 65, and Nature, Vol. 271, February 1978, pp 512-516.

Moreover, X-ray photo electron spectroscopy has shown considerable quantities of carbon (13-50% by weight) in the surface. It will be appreciated that the carbon remaining in the product can be burned away in order to provide the porosity desired for catalysis.

An important advantage of the zeolites as starting materials for the present process is the possibility of incorporating in the ultimately desired product a variety of metal ions that can be introduced beforehand into the zeolites in accurately dosed quantities by exchange of the naturally present metal ions, which is, for example, important for the final product's application as heterogeneous catalyst or as starting material for the fabrication of electrical and/or coating ceramic materials. Another advantage of employing zeolites is the possibility of varying the Si/Al ratio in the initial zeolites over a wide range and thus also in the final product while maintaining the desired reproducibility of the relevant conversion. In addition, the highly porous structure of the zeolites enables a very good distribution of non-volatile carbon materials in the form of intra-crystalline polymer or carbon as reducing agent.

The process according to the invention is preferably carried out at temperatures of 1400-1600 °C and more preferably at temperatures of 1450-1550 °C.

According to a preferred embodiment of the process according to the invention, a space velocity (GHSV) of the nitrogen-containing, flowing gas, expressed as normal $m^3$ nitrogen/hour.kg zeolite, of 0.1 to 50 $Nm^3$/hour.kg is employed.

For good results, the reaction time will generally be greater than or equal to $\frac{0 \cdot 25}{GHSV}$ hour GHSV being expressed in $Nm^3$ nitrogen/kg.zeolite.hour.

The carbon used for the reaction will preferably be a pure carbon with a high active surface and in particular with an active surface of more than 25 $m^2$/g. As a special, preferred source of carbon, soot can be used, but other sources of carbon are also suitable as starting material, such as charcoal or other materials displaying more or less graphite structure, in as far as they can be brought into a finely divided state by grinding, gaseous carbon compounds such as methane, or suitable reactants from which polymers, such as polyurethane, can be formed in situ in the zeolite, the polymers subsequently functioning as sources of carbon when heated.

During the carbothermic reduction, the carbon reacts with oxygen under formation of carbon monoxide as by-product. It is therefore desirable to keep the partial pressure of the carbon monoxide as low as possible in order to raise the speed of the desired reaction. This is achieved by passing nitrogen through the reactor.

In order to obtain good results, the initial zeolite should be mixed with a quantity of carbon or carbon-containing compound of 20-50% by weight, calculated on the weight of the zeolite as pure carbon. Preferably, this quantity of carbon is 30-45% by weight, and more preferably 40-45% by weight.

The carbothermic reduction can, in principle, be carried out in a great variety of reactors suitable for this purpose, made of heat-resistant materials, such as quartz, carborundum, mullite ($Al_2O_3$) and the like. Preferably, tube reactors are employed, provided with an external heating jacket.

An advantage of the process according to the invention is that a great variety of zeolites as regards the silicon/aluminium ratio and the charge-compensating cations in the zeolite can be employed, depending on the ultimately desired product, in a reproducible and controllable manner. Initial zeolites may, for example, be those of the A or Y type in which the originally present counterions are exchanged for $Ca^{++}$. $NH_4^{+}$ or other counterions required for specific applications.

According to the present invention, powders are preferably prepared which can be used as starting materials for the fabrication of shaped, high-grade technical ceramic material.

The materials obtained by the present process are characterized by a relatively low specific surface of 1-15 $m^2$/g. This is certainly sufficient for possible use as catalyst carrier and these products have therefore been found to be very suitable for use as carrier for a great variety of industrial heterogeneous catalysts for a very great number of reactions in the chemical and/or petrochemical process industry.

It will be appreciated that the present process offers substantial advantages over other, previously proposed methods of preparation for non-oxide powders from the environmental viewpoint, since it uses no aggressive reagents, such as chlorine or nitric acid.

The invention also relates to the new products that can be obtained by the above-described process and to their application.

The invention will now be further illustrated with reference to the following examples, without however limiting the scope of the invention to these embodiments.

EXAMPLE 1

Samples of various types of zeolites with different counterions were wet mixed with 41% by weight pure carbon in the form of soot, calculated on the weight of the zeolite. The mixtures obtained were then employed as starting materials for the process according to the invention. In these experiments the reaction temperature was 1495 °C and the reaction time 11.5 hours, while the GHSV was 0.6 $m^3$ nitrogen/hour.kg zeolite. The experiments were carried out at a pressure of 1 atmosphere in a tube reactor having an internal diameter of 25 mm. The quantity of zeolite was 10 g for each experiment. The results are given in Table I below.

## Table I

## Carbothermic reduction of zeolites

| Starting material | Product | |
|---|---|---|
| Zeolite | % weight N | Active surface $m^2/g$ |
| Zeolite A with $Ca^{2+}$ exchanged | 28 | 8 |
| Zeolite Y with rare earth metal ions exchanged | 25 | 1-5 |
| ZSM-5 | 31 | 1-5 |
| Zeolite Y with $NH_4^+$ exchanged | 25 | 13 |

It will be appreciated that a great variety of zeolites with different sorts of cations and with a variable quantity of aluminium in the lattice can be employed.

## Claims

1. Process for the preparation of sialon products, characterized in that zeolites mixed with carbon or a carbon-containing compound are subjected to a carbothermic reduction in nitrogen-containing, flowing gas at a temperature in the range of 1350-1700 °C.

2. Process as claimed in claim 1, characterized in that the reaction is carried out at a temperature in the range of 1400-1600 °C.

3. Process as claimed in claim 1 or 2, characterized in that the reaction is carried out at a temperature in the range of 1450-1550 °C.

4. Process as claimed in any one of the claims 1-3, characterized in that the space velocity (GHSV) of the nitrogen-containing gas is between 0.1 to 50 $Nm^3$ nitrogen/hour.kg zeolite.

5. Process as claimed in any one of the claims 1-4, characterized in that the reaction time is greater than or equal to

$$\frac{0 \cdot 25}{GHSV} \quad hour$$

where GHSV is expressed in $Nm^3$ nitrogen/kg zeolite.hour.

6. Process as claimed in any one of the claims 1-5, characterized in that the initial zeolite is mixed with a quantity of carbon or carbon-containing compound, calculated as pure carbon, of 20-50% by weight of the zeolite.

7. Process as claimed in claim 6, characterized in that the initial zeolite is mixed with a quantity of carbon, calculated as pure carbon, of 40-45% by weight.

8. Process as claimed in claim 1, characterized in that carbon with an active surface of more than 25 $m^2 g$ is employed.

9. Process as claimed in claim 6, characterized in that soot is employed as source of carbon.

10. Sialon products prepared by means of a process as claimed in claim 1, characterized in that they have an average nitrogen content in the bulk of 25-31% by weight and an active surface measured according to the BET method of 1-15 $m^2$ g.

11. Shaped ceramic materials, characterized in that they are obtained from at least one of the sialon products as claimed in claim 10.

12. Catalyst systems in which the carrier consists of at least one of the sialon products as claimed in claim 10.